# EUROPEAN PATENT SPECIFICATION

(11) **EP 3 298 085 B1**
(45) Date of publication and mention of the grant of the patent: **27.03.2019**
(21) Application number: 16730934.3
(22) Date of filing: 23.05.2016
(51) Int. Cl.: C09D 5/00

(54) **WATER-BASED ZINC-RICH PRE-CONSTRUCTION PRIMER**
WÄSSRIGE ZINKREICHE VORKONSTRUKTIONSGRUNDIERUNG
APPRÊT AQUEUX DE PRÉ-CONSTRUCTION RICHE EN ZINC

(30) Priority: 22.05.2015 US 201562165677 P
(43) Date of publication of application: 28.03.2018
(73) Proprietor: The Sherwin-Williams Company, Cleveland, OH 44115 (US)
(72) Inventor: ZHAO, Wendy, Broadview Heights, OH 44147 (US); RIOS, Justin, M., Seven Hills, OH 44131 (US); CARNY, George P., Medina, Ohio 44256 (US)
(74) Representative: Heinemann, Monica
(86) International application number: PCT/US2016/033746
(87) International publication number: WO 2016/191355

(56) References cited:
- EP-A1- 0 513 883
- US-A- 5 167 701
- US-A- 5 338 348
- US-A1- 2002 119 337

## Description

### FIELD OF THE INVENTION

This invention relates to a zinc-rich primer coating composition for use in coating metal substrates, such as those used in ship building, petrochemical tank construction, water storage and treatment tank fabrication, and structural steel. More specifically, the zinc-rich primer coating composition is a water-based zinc-rich weldable pre-construction primer that includes little to no volatile organic compounds (VOCs) or organic latex resins, providing the end user added flexibility in facilities where VOC and hazardous air pollutant (HAPS) emissions are restricted.

### BACKGROUND

Typically, primer compositions used to coat pre-construction metal substrates used in ship building may include harsh solvents and organic resin materials. These compositions may release the solvents and VOCs into the environment upon application or prevent the compositions from meeting various industry standards, such as for smoke density, weldability, and porosity. Moreover, the presence of organic resin materials in existing primer compositions may promote the growth of mold or other organisms.

The primer compositions that don't include harsh solvents and organic resin components are generally made of potassium silicate. While not presenting the challenges of the solvent-based systems, the existing potassium silicate primer compositions have adherent properties that make it difficult to perform a standard convention or airless spray application. Therefore, it would be beneficial to develop a water-based primer composition that is free from hazardous volatile organic compounds, solvents, silicates, and organic resin components, but has the adherent properties, such as weathering, fast dry times, corrosion protection, long pot life, high speed weldability and desired application properties, which make it suitable for use in coating pre-construction metal substrates,

### SUMMARY

In one embodiment, a two-part primer for metal substrates is water-based and includes first part including a colloidal silica present in the amount of about 20 weight percent to about 80 weight percent, based on the total weight of the first part; a silane coupling agent selected from the group consisting of epoxysilanes, mercaptosilanes, and modified silanes having a functional group active to an epoxy group, the silane coupling agent present in the amount of about 0.05 weight percent to about 15 weight percent based on the weight of the first part; and a cellulose either in the amount of about 0.1 weight percent to about 2 weight percent.

The primer may also include a second part including at least 50% zinc powder. The first and second part are generally present in the two-part water based primer in a ratio of about 1:1. Moreover, the two-part primer is generally inorganic and substantially free of volatile organic compounds and organic latex resins.

### DETAILED DESCRIPTION

In one embodiment, a water-based zinc-rich primer ("the water-based primer") may be used to coat metal substrates before they are used in, for example, ship building. The water-based primer is sprayable by conventional and airless applications, dries quickly after application, protects the metal substrate from corrosion, provides weathering resistance, has a long pot life, and may be used in situations in which high speed welding is desired for construction of the ship. For purposes of illustration, this water-based primer may be referred to as a composition for use in ship building. However, it should be understood that this water-based primer has numerous applications in circumstances where the above-referenced characteristics are needed,

More specifically, the water-based primer may include a two part system. The two part system may consist of a first Part A and a second part B, which are generally combined in a one-to-one ratio before application of the water-based primer. Part A of the water-based primer may be created using novel sol-gel technology. Part B may include at least fifty (50) percent zinc powder.

The sol-gel process used to create Part A involves the dispersion of inorganic particles into a colloidal solution (sol). This solution then acts as the precursor for an integrated network (or gel), with the solid particles and liquid (water) dispersed in each other. Typically, sol-gel processes have been used to produce coatings that are very thin, limited by the particle size of the inorganic material, for example between about 100 to about 220 nm. However, surprisingly, the inventors discovered that the sol-gel process may be used to create the water-based primer having a dry thickness (after evaporation of the water) of about 0,5 to about 1.0 mils, and a wet thickness (upon application) of about 1.0 to about 2.0 mils,

Part A of the water-based primer is generally inorganic, with the resulting Part A composition being substantially free of volatile organic compounds and organic latex resins. It should be understood that a composition that is substantially free of a component includes less than 1,0%, Part A may be created by combining i) a colloidal silica, ii) a silane coupling agent, and iii) a cellulose ether. Part A of the water-based primer may also include fumed silicas, clay thickeners, surfactants, anti-foaming agents (defoamers), and corrosion inhibitors.

In one embodiment, the colloidal silica has a small particle size distribution, enabling it to be monodispersed within the system. Without being bound to theory, it is likely that the use of the colloidal silica results in better binder adherence for the water-based primer. The colloidal silica may be present in the range of about twenty (20) weight percent to about eighty (80) weight percent based on the weight of the Part A composition. Suitable colloidal silicas may include those commercially available from Dupont under the trademarks Ascend® and LUDOX™.

The silane coupling agent is thought to improve the surface adhesion of the Part A composition. It is generally present in Part A in an about from about 0,05 weight percent to about 15.0 weight percent, based on the weight of the Part A system. The silane coupling agent may be selected from the group consisting of epoxysilanes, mercaptosilanes, and modified silanes having a functional group active to an epoxy group.

More specifically, the silane coupling agent may include, but are not limited to, epoxysilanes such as γ-glycidoxypropyltrimethoxysilane, γ-glycidoxypropylmethyldimethoxysilane, 3,4-epoxycyclohexylethyltrimethoxysilane, and 3,4-epoxycyclohexylethylmethyldimethoxysilane; aminosilanes such as aminomethyltriethoxysilane, N-(β-aminoethyl)aminomethyl-trimethoxysilane, aminomethyldiethoxysilane, N-(β-aminoethyl)methyltributoxysilane, γ-aminopropyltriethoxysilane, γ-aminopropylmethyldiethoxysilane, γ-aminoisobutyltrimethoxysilane, N-bis(β-hydroxyethyl)-γ-aminopropyltriethoxysilane, N-(β)-aminoethyl)-γ-aminopropyltrimethoxysilane, N-(β-aminoethyl)-γ-aminopropylmethyldimethoxysilane, N-(β-aminoethyl)-γ-amino-β-methylpropyltrimethoxysilane; mercaptosilanes such as γ-mercaptopropylmethyldimethoxysilane, γ-mercaptopropyltrimethoxysilane, γ-mercaptopropylmethyldiethoxysilane, γ-mercaptopropyltriethoxysilane, γ-mercaptopropylethyldimethoxysilane, γ-mercaptopropylethyldiethoxysilane, β-mercaptopropyldimethylmethoxysilane, β-mercaptoethylmethyldimethoxysilane, β-mercaptoethyltriethoxysilan; and modified silanes, The modified silanes may be prepared by reacting about one (1) mole of the above epoxysilanes with about 0.1 to 1 mole of the above aminosilanes or mercaptosilanes having a functional group active to epoxy group, for example a hydroxyl group, amino group, imino group, or mercapto group. In one embodiment, the silane coupling agent may be an organoalkoxy silane, such as Silquest A-189, available from Momentive Performance Materials, Inc.

The cellulose ether may be used to help stabilize the viscosity of the Part A composition and improve film formation, allowing for a thicker film to be formed by the water-based primer upon application, In one embodiment the cellulose ethermay be present in an amount from about 0.1 weight percent to about 2 weight percent of the Part A system. The cellulose ether may be selected from, but not limited to methylcellulose, methylethylcellulose, hydroxypropyl methylcellulose, hydroxypropyl cellulose, (hydroxyethyl) methylcellulose, and mixtures thereof. In the practice, a particular viscosity range of these cellulose ethers has been found to exhibit unexpected stability and interfacial properties to the colloidal silica, enhancing stability and improving airless applications. In one embodiment, the combination of a modified cellulose ether, such as Methocel®, commercially available from Dow Chemical, with a clay thickener provides improved properties. The clay thickener may be used as a rheology modifier, and may be present in the amount of about 0.05 weight percent to about 0,5 weight percent. Suitable clay thickeners may include Bentone AD, a hectorite clay, commercially available from Elementis Specialties.

Optionally, Part A of the water-based primer may also include a fumed silica component, such as CAB-O-SIL M5, commercially available from Cabot Corporation. The fumed silica component may be present in an amount of about 1.0 to about 5.0 weight percent. In another embodiment, Part A may also include further additives, such as surfactants, anti-foaming agents (defoamers), and corrosion inhibitors. The corrosion inhibitors may be used namely to prevent flash rust from forming upon application of the primer. In one embodiment, suitable defoamers may include Tego Foamex 810, BYK-022, BYK-024, commercially available from Evonik Resource Efficiency GmbH.

Part B of the water-based primer includes from about 50% by weight to about 100% by weight of zinc powder (or dust). The weight percentage of the zinc powder is determined based on the total weight of the Part B. Part B may also include various fillers, including calcium carbonate, kaolin clay and alternative corrosion inhibitors.

The water-based primer may be prepared by combining Part A with Part B in a one-to-one ratio. The two part system may be provided to the customer as separate components, which may be mixed before application, Before application, the customer may need to further stir or shake the container to fully integrate the two parts of the system. The water-based primer may have a long pot life, from about 24 hours to about 72 hours, thus requiring the user to shut down its machinery less frequently. Moreover, it will generally dry in about 10 minutes, to the touch, and in about 3 hours for handling.

### EXAMPLE

In one example, Part A of the water-based primer was made by combining about 24.39% deionized water with about 0.71% of Anti-Terra 250 surfactant and about 0.01%, Tego Foamex 810 anti-foaming agent. To the water, surfactant, and anti-foaming agent solution, about 2.19% of CAB-O-SIL M5 fumed silica, about 10.93% LUDOX® colloidal silica, and an additional 2.14% deionized water were added slowly with agitation. The sides and lid of the vessel were scraped and the mixture was stirred for approximately 15 minutes, The sides and lid of the vessel were then washed with an additional 1.86% of deionized water to form a colloidal silica solution,

Then, about 3.61% of deionized water, heated to a minimum temperature of about 140F, was combined with about 0,55% of Methocel A4C. The cellulose ether mixture was combined with the colloidal silica solution and stirred for about six minutes. After six minutes, about 7.32% of cold deionized water was added to the resulting colloidal silica solution. The solution was then mixed for an additional twenty minutes.

About 0.02% of Foamex 810 and about 0.35% of Surfynol 440 surfactant were slowly added and stirred into the solution. And, a premixed solution of about 1.86% deionized water, about 0.04% of a Halox 570 corrosion inhibitor, and about 0.01% of aqueous ammonia, was added to the solution. The solution was stirred for about 10 minutes, To the resulting solution, an additional 32,80% of the Ludox® colloidal silica material was added, along with about 0.30% of a fluoro-surfactant.

About 0.55% of Silquest 189 silane coupling agent was added to the colloidal silica solution to form a resulting matrix, Finally, about 0,22% of a rheology modifier, Bentone AD hectorite clay, was premixed with about 8.56% deionized water and added to the matrix. The matrix was then stirred for approximately 25 minutes before rinsing the sides and lid of the vessel with about 1.58% deionized water to form Part A. Part A was then placed in containers within 24 hours and passed through a 50 micron filter. The resulting Part A was found to have a viscosity of about 40-50 KU at 75 °F +/- 2°F and a weight/gallon of 8.67-9.07.

When completed, Part A was combined in a 1:1 ratio with a zinc-rich Part B component. In one embodiment. Part B includes a mixture of about 86% zinc powder, about 10% calcium carbonate, about 4% polygloss 90 clay.

It was found that the resulting water-based primer had a solids content of about 59%, a wet film thickness of about 1.7 mils, a dry film thickness of about 0.6 mils, dried to the touch, to handle, to topcoat and, fully cured in 5 minutes, 10 minutes, 3 hours, and 7 days, respectively, It was also found that the pot life of the primer was about 72 hours and had a shelf life of about nine months. It was further determined that the primer had a zinc content of about 46% when dry.

Water resistance testing was performed by methods commonly used in the industry and it was found that the resulting primer had excellent early water resistance after only an hour of drying time. It was also determined that, because of the lack of organic components in the primer, mold formation was not an issue,

Finally, it was found that when applied to a metal substrate and dried, the primer met or exceeded industry standards for smoke density. Generally, smoke density is calculated according to ASTM E662, "Specific Optical Density of Smoke Generated by Solid Materials," Smoke density testing is used to measure the propensity of materials, such as paint coatings, to generate smoke when exposed to a heat source,

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed, Thus, use of the term "or" herein is the inclusive, and not the exclusive use, See Bryan A. Gamer, A Dictionary of Modern Legal Usage 624 (2d. Ed, 1995). Also, to the extent that the terms "in" or "into" are used in the specification or the claims, it is intended to additionally mean "on" or "onto," To the extent that the term "substantially" is used in the specification or the claims, it is intended to take into consideration the degree of precision available or prudent in manufacturing. To the extent that the term "operably connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10% of the number. In other words, "about 10" may mean from 9 to 11.

As stated above, while the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art, having the benefit of the present application. Therefore, the application, in its broader aspects, is not limited to the specific details, illustrative examples shown, or any apparatus referred to. Departures may be made from such details, examples, and apparatuses without departing from the spirit or scope of the general inventive concept.

## Claims

1. A two-part primer for metal substrates, wherein the two-part primer is water-based and comprises:
a. a first part, wherein the first part is substantially free of volatile organic compounds and organic latex resins and comprises:
i. a colloidal silica present in the amount of 20 weight percent to 80 weight percent, based on the total weight of the first part;
ii. a silane coupling agent selected from the group consisting of epoxysilanes, mercaptosilanes, and modified silanes having a functional group active to an epoxy group, the silane coupling agent present in the amount of 0.05 weight percent to 15 weight percent based on the weight of the first part; and
iii. a cellulose ether in the amount of 0.1 weight percent to 2 weight percent; and
b. a second part comprising at least 50% zinc powder;
wherein the first part and the second part are present in the two-part water based primer in a ratio of 1:1.

2. The two-part primer of claim 1, wherein the first part further comprises a rheology modifier; wherein the rheology modifier is a clay thickener present in the amount of 0.05 weight percent to 0.5 weight percent, based on the weight of the first part.

3. The two-part primer of claim 1 or 2, wherein the first part further comprises a fumed silica.

4. The two-part primer of any one of claims 1 to 3, wherein the silane coupling agent is selected from the group consisting of epoxysilanes, aminosilanes, mercaptosilanes, and modified silanes.

5. The two-part primer of any one of claims 1 to 4, wherein the cellulose ether is selected from the group consisting of ethers of methylcellulose, methylethylcellulose, hydroxypropyl methylcellulose, hydroxypropyl cellulose, (hydroxyethyl) metylcellulose, and mixtures thereof.

6. The two-part primer of any one of claims 1 to 5, wherein the two-part primer is sprayable at a solids content of at least 40 percent by weight of the two-part primer.

7. A binder composition for use in a water-based primer dispersion, wherein the binder composition is a sol-gel formulation that is substantially free of volatile organic compounds and organic latex resins and comprises:
c. a colloidal silica present in the amount of 20 weight percent to 80 weight percent, based on the total weight;
d. a silane coupling agent selected from the group consisting of epoxysilanes, mercaptosilanes, and modified silanes having a functional group active to an epoxy group, the silane coupling agent present in the amount of 0.05 weight percent to 15 weight percent based on the total weight; and
e. a cellulose ether in the amount of 0.1 weight percent to 2 weight percent based on the total weight.

8. The binder composition of claim 7, wherein the binder composition further comprises a rheology modifier; wherein the rheology modifier is a clay thickener present in the amount of 0.05 weight percent to 0.5 weight percent, based on the total weight.

9. The binder composition of claim 7 or 8, wherein the binder composition further comprises a fumed silica.

10. The binder composition of any one of claims 7 to 9, wherein the silane coupling agent is selected from the group consisting of epoxysilanes, aminosilanes, mercaptosilanes, and modified silanes.

11. The two-part primer of claim 4 or the binder composition of claim 10, wherein the epoxysilane is selected from the group consisting of γ-glycidoxypropyltrimethoxysilane, γ-glycidoxypropylmethyldimethoxysilane, 3,4-epoxycyclohexylethyltrimethoxysilane, 3,4-epoxycyclohexylethylmethyldimethoxysilane, and combinations thereof.

12. The two-part primer of claim 4 or the binder composition of claim 10, wherein the aminosilane is selected from the group consisting of aminomethyltriethoxysilane, N-(β-aminoethyl)aminomethyl-trimethoxysilane, aminomethyldiethoxysilane, N-(β-aminoethyl)methyltributoxysilane, γ-aminopropyltriethoxysilane, γ-aminopropylmethyldiethoxysilane, γ-aminoisobutyltrimethoxysilane, N-bis(β-hydroxyethyl)-γ-aminopropyltriethoxysilane, N-(β-aminoethyl)-γ-aminopropyltrimethoxysilane, N-(β-aminoethyl)-γ-aminopropylmethyldimethoxysilane, N-(β-aminoethyl)-γ-amino-β-methylpropyltrimethoxysilane, and combinations thereof.

13. The two-part primer of claim 4 or the binder composition of claim 10, wherein the mercaptosilane is selected from the group consisting of γ-mercaptopropylmethyldimethoxysilane, γ-mercaptopropyltrimethoxysilane, γ-mercaptopropylmethyldiethoxysilane, γ-mercaptopropyltriethoxysilane, γ-mercaptopropylethyldimethoxysilane, γ-mercaptopropylethyldiethoxysilane, β-mercaptopropyldimethylmethoxysilane, β-mercaptoethylmethyldimethoxysilane, β-mercaptoethyltriethoxysilane, and combinations thereof.

14. The binder composition of any one of claims 7 to 13, wherein the cellulose ether is selected from the group consisting of ethers of methylcellulose, methylethylcellulose, hydroxypropyl methylcellulose, hydroxypropyl cellulose, (hydroxyethyl) metylcellulose, and mixtures thereof.

## Patentansprüche

1. Ein Zweikomponentenprimer für Metallsubstrate, wobei der Zweikomponentenprimer auf Wasserbasis ist und umfasst:
a. eine erste Komponente, wobei die erste Komponente im Wesentlichen frei von flüchtigen organischen Verbindungen und organischen Latexharzen ist und umfasst:
i. ein kolloidales Siliciumdioxid, das in der Menge von 20 Gew.-% bis 80 Gew.-% vorliegt, bezogen auf das Gesamtgewicht der ersten Komponente,
ii. ein Silan-Kupplungsmittel, ausgewählt aus der Gruppe bestehend aus Epoxysilanen, Mercaptosilanen und modifizierten Silanen mit einer funktionellen Gruppe, die auf eine Epoxidgruppe wirkt, wobei das Silan-Kupplungsmittel in der Menge von 0,05 Gew.-% bis 15 Gew.-% vorliegt, bezogen auf das Gewicht der ersten Komponente, und
iii. einen Celluloseether in der Menge von 0,1 Gew.-% bis 2 Gew.-%, und
b. eine zweite Komponente, die wenigstens 50% Zinkpulver umfasst,
wobei die erste Komponente und die zweite Komponente in dem Zweikomponentenprimer auf Wasserbasis in einem Verhältnis von 1:1 vorliegen.

2. Der Zweikomponentenprimer nach Anspruch 1, wobei die erste Komponente ferner einen Rheologie-Modifizierer umfasst, wobei der Rheologie-Modifizierer ein Ton-Verdickungsmittel ist, das in der Menge von 0,05 Gew.-% bis 0,5 Gew.-% vorliegt, bezogen auf das Gewicht der ersten Komponente.

3. Der Zweikomponentenprimer nach Anspruch 1 oder 2, wobei die erste Komponente ferner ein pyrogenes Siliciumdioxid umfasst.

4. Der Zweikomponentenprimer nach einem der Ansprüche 1 bis 3, wobei das Silankupplungsmittel ausgewählt ist aus der Gruppe bestehend aus Epoxysilanen, Aminosilanen, Mercaptosilanen und modifizierten Silanen.

5. Der Zweikomponentenprimer nach einem der Ansprüche 1 bis 4, wobei der Celluloseether ausgewählt ist aus der Gruppe bestehend aus Ethern von Methylcellulose, Methylethylcellulose, Hydroxypropylmethylcellulose, Hydroxypropylcellulose, (Hydroxyethyl)methylcellulose und Mischungen davon.

6. Der Zweikomponentenprimer nach einem der Ansprüche 1 bis 5, wobei der Zweikomponentenprimer bei einem Feststoffgehalt von wenigstens 40 Gew.-% des Zweikomponentenprimers spritz-/sprühbar ist.

7. Eine Bindemittelzusammensetzung zur Verwendung in einer Primerdispersion auf Wasserbasis, wobei die Bindemittelzusammensetzung eine Sol-Gel-Formulierung ist, die im Wesentlichen frei von flüchtigen organischen Verbindungen und organischen Latexharzen ist und umfasst:
c. ein kolloidales Siliciumdioxid, das in der Menge von 20 Gew.-% bis 80 Gew.-% vorliegt, bezogen auf das Gesamtgewicht,
d. ein Silan-Kupplungsmittel, ausgewählt aus der Gruppe bestehend aus Epoxysilanen, Mercaptosilanen und modifizierten Silanen mit einer funktionellen Gruppe, die auf eine Epoxidgruppe wirkt, wobei das Silan-Kupplungsmittel in der Menge von 0,05 Gew.-% bis 15 Gew.-% vorliegt, bezogen auf das Gesamtgewicht, und
e. einen Celluloseether in der Menge von 0,1 Gew.-% bis 2 Gew.-%, bezogen auf das Gesamtgewicht.

8. Die Bindemittelzusammensetzung nach Anspruch 7, wobei die Bindemittelzusammensetzung ferner einen Rheologie-Modifizierer umfasst, wobei der Rheologie-Modifizierer ein Ton-Verdickungsmittel ist, das in der Menge von 0,05 Gew.-% bis 0,5 Gew.-% vorliegt, bezogen auf das Gesamtgewicht.

9. Die Bindemittelzusammensetzung nach Anspruch 7 oder 8, wobei die Bindemittelzusammensetzung ferner ein pyrogenes Siliciumdioxid umfasst.

10. Die Bindemittelzusammensetzung nach einem der Ansprüche 7 bis 9, wobei das Silankupplungsmittel ausgewählt ist aus der Gruppe bestehend aus Epoxysilanen, Aminosilanen, Mercaptosilanen und modifizierten Silanen.

11. Der Zweikomponentenprimer nach Anspruch 4 oder die Bindemittelzusammensetzung nach Anspruch 10, wobei das Epoxysilan ausgewählt ist aus der Gruppe bestehend aus γ-Glycidoxypropyltrimethoxysilan, γ-Glycidoxypropylmethyldimethoxysilan, 3,4-Epoxycyclohexylethyltrimethoxysilan, 3,4-Epoxycyclohexylethylmethyldimethoxysilan und Kombinationen davon.

12. Der Zweikomponentenprimer nach Anspruch 4 oder die Bindemittelzusammensetzung nach Anspruch 10, wobei das Aminosilan ausgewählt ist aus der Gruppe bestehend aus Aminomethyltriethoxysilan, N-(β-Aminoethyl)aminomethyltrimethoxysilan, Aminomethyldiethoxysilan, N-(β-Aminoethyl)methyltributoxysilan, y-Aminopropyltriethoxysilan, γ-Aminopropylmethyldiethoxysilan, γ-Aminoisobutyltrimethoxysilan, N-Bis(β-hydroxyethyl)-γ-aminopropyltriethoxysilan, N-(β-Aminoethyl)-γ-aminopropyltrimethoxysilan, N-(β-Aminoethyl)-γ-aminopropylmethyldimethoxysilan, N-(β-Aminoethyl)-γ-amino-β-methylpropyltrimethoxysilan und Kombinationen davon.

13. Der Zweikomponentenprimer nach Anspruch 4 oder die Bindemittelzusammensetzung nach Anspruch 10, wobei das Mercaptosilan ausgewählt ist aus der Gruppe bestehend aus γ-Mercaptopropylmethyldimethoxysilan, γ-Mercaptopropyltrimethoxysilan, γ-Mercaptopropylmethyldiethoxysilan, γ-Mercaptopropyltriethoxysilan, γ-Mercaptopropylethyldimethoxysilan, γ-Mercaptopropylethyldiethoxysilan, β-Mercaptopropyldimethylmethoxysilan, β-Mercaptoethylmethyldimethoxysilan, β-Mercaptoethyltriethoxysilan und Kombinationen davon.

14. Die Bindemittelzusammensetzung nach einem der Ansprüche 7 bis 13, wobei der Celluloseether ausgewählt ist aus der Gruppe bestehend aus Ethern von Methylcellulose, Methylethylcellulose, Hydroxypropylmethylcellulose, Hydroxypropylcellulose, (Hydroxyethyl)methylcellulose und Mischungen davon.

## Revendications

1. Apprêt à deux composants pour substrats métalliques, où l'apprêt à deux composants est un apprêt à base d'eau et comprend :
a. un premier composant, où le premier composant est essentiellement exempt de composés organiques volatils et de résines latex organiques et comprend :
i. une silice colloïdale présente à une quantité, rapportée au poids total du premier composant, qui va de 20 pour cent en poids à 80 pour cent en poids ;
ii. un agent de couplage de type silane sélectionné dans le groupe consistant en des époxysilanes, des mercaptosilanes et des silanes modifiés ayant un groupement fonctionnel actif envers un groupement époxy, l'agent de couplage de type silane étant présent à une quantité, rapportée au poids du premier composant, qui va de 0,05 pour cent en poids à 15 pour cent en poids ; et
iii. un éther de cellulose à une quantité qui va de 0,1 pour cent en poids à 2 pour cent en poids; et
b. un deuxième composant comprenant au moins 50 % d'une poudre de zinc ;
où le premier composant et le deuxième composant sont présents dans l'apprêt à base d'eau à deux composants dans un rapport de 1:1.

2. Apprêt à deux composants de la revendication 1, où le premier composant comprend en outre un modificateur de rhéologie ; où le modificateur de rhéologie est un épaississant à base d'argile présent à la quantité, rapportée au poids du premier composant, qui va de 0,05 pour cent en poids à 0,5 pour cent en poids.

3. Apprêt à deux composants de la revendication 1 ou 2, où le premier composant comprend en outre une silice sublimée.

4. Apprêt à deux composants de l'une quelconque des revendications 1 à 3, où l'agent de couplage de type silane est sélectionné dans le groupe consistant en des époxysilanes, des aminosilanes, des mercaptosilanes et des silanes modifiés.

5. Apprêt à deux composants de l'une quelconque des revendications 1 à 4, où l'éther de cellulose est sélectionné dans le groupe consistant en des éthers de méthylcellulose, de méthyléthylcellulose, d'hydroxypropylméthylcellulose, d'hydroxypropylcellulose, d'(hydroxyéthyl)méthylcellulose et des mélanges de ceux-ci.

6. Apprêt à deux composants de l'une quelconque des revendications 1 à 5, où l'apprêt à deux composants est pulvérisable à une teneur en solides d'au moins 40 pour cent en poids de l'apprêt à deux composants.

7. Composition de liant pour une utilisation dans une dispersion d'un apprêt à base d'eau, où la composition de liant est une formulation sol-gel qui est essentiellement exempte de composés organiques volatils et de résines de latex organiques et comprend :
c. une silice colloïdale présente à la quantité, rapportée au poids total, qui va de 20 pour cent en poids à 80 pour cent en poids ;
d. un agent de couplage de type silane sélectionné dans le groupe consistant en des époxysilanes, des mercaptosilanes et des silanes modifiés ayant un groupement fonctionnel actif envers un groupement époxy, l'agent de couplage de type silane étant présent à la quantité, rapportée au poids total, qui va de 0,05 pour cent en poids à 15 pour cent en poids ; et
e. un éther de cellulose à la quantité, rapportée au poids total, qui va de 0,1 pour cent en poids à 2 pour cent en poids.

8. Composition de liant de la revendication 7, ou la composition de liant comprend en outre un modificateur de rhéologie ; où le modificateur de rhéologie est un épaississant à base d'argile présent à la quantité, rapportée au poids total, qui va de 0,05 pour cent en poids à 0,5 pour cent en poids.

9. Composition de liant de la revendication 7 ou 8, où la composition de liant comprend en outre une silice sublimée.

10. Composition de liant de l'une quelconque des revendications 7 à 9, où l'agent de couplage de type silane est sélectionné dans le groupe consistant en des époxysilanes, des aminosilanes, des mercaptosilanes et des silanes modifiés.

11. Apprêt à deux composants de la revendication 4 ou composition de liant de la revendication 10, où l'époxysilane est sélectionné dans le groupe consistant en le γ-glycidoxypropyltriméthoxysilane, le γ-glycidoxypropylméthyldiméthoxysilane, le 3,4-époxycyclohexyléthyltriméthoxysilane, le 3,4-époxycyclohexyléthylméthyldiméthoxysilane et des combinaisons de ceux-ci.

12. Apprêt à deux composants de la revendication 4 ou composition de liant de la revendication 10, où l'aminosilane est sélectionné dans le groupe consistant en l'aminométhyltriéthoxysilane, le N-(β-aminoéthyl)aminométhyltriméthoxysilane, l'aminométhyldiéthoxysilane, le N-(β-aminoéthyl)méthyltributoxysilane, le γ-aminopropyltriéthoxysilane, le γ-aminopropylméthyldiéthoxysilane, le γ-aminoisobutyltriméthoxysilane, le N-bis(β-hydroxyéthyl)-γ-aminopropyltriéthoxysilane. le N-(β-aminoéthyl)-γ-aminopropyltriméthoxysilane, le N-(β-aminoéthyl)-γ-aminopropylméthyldiméthoxysilane, le N-(β-aminoéthyl)-γ-amino-β-méthylpropyltriméthoxysilane et des combinaisons de ceux-ci.

13. Apprêt à deux composants de la revendication 4 ou composition de liant de la revendication 10, où le mercaptosilane est sélectionné dans le groupe consistant en le γ-mercaptopropylméthyldiméthoxysilane, le γ-mercaptopropyltriméthoxysilane, le γ-mercaptopropylméthyldiéthoxysilane, le γ-mercaptopropyltriéthoxysilane, le γ-mercaptopropyléthyldiméthoxysilane, le γ-mercaptopropyléthyldiéthoxysilane, le β-mercaptopropyldiméthylméthoxysilane, le β-mercaptoéthylméthyldiméthoxysilane, le β-mercaptoéthyltriéthoxysilane et des combinaisons de ceux-ci.

14. Composition de liant de l'une quelconque des revendications 7 à 13, où l'éther de cellulose est sélectionné dans le groupe consistant en des éthers de méthylcellulose, de méthyléthylcellulose, d'hydroxypropylméthylcellulose, d'hydroxypropylcellulose, d'(hydroxyéthyl)méthylcellulose et des mélanges de ceux-ci.
